# EUROPEAN PATENT APPLICATION

(11) **EP 4 768 795 A1**
(43) Date of publication of application: **01.07.2026**
(21) Application number: 24927464.8
(22) Date of filing: 24.09.2024
(51) Int. Cl.: F24F 1/0076, F24F 8/192, F24F 8/30, B01D 46/00, B03C 3/38, B03C 3/40

(54) **AIR CONDITIONER AND AIR CLEANER HAVING ELECTRIC DUST COLLECTING DEVICE**

(30) Priority: 26.02.2024 JP 2024026751
(71) Applicant: Samsung Electronics Co., Ltd., Suwon-si, Gyeonggi-do 16677 (KR)
(72) Inventor: FUKUOKA, Daisuke, Yokohama-shi, Kanagawa 230--0027 (JP); TSUJIMOTO, Kahoru, Yokohama-shi, Kanagawa 230--0027 (JP); KATAOKA, Takuya, Yokohama-shi, Kanagawa 230--0027 (JP)
(74) Representative: Walaski, Jan Filip
(86) International application number: PCT/KR2024/014408
(87) International publication number: WO 2025/183291

(57) **Abstract**

An air conditioner includes an electrostatic precipitator configured to remove airborne particulate matter before discharging sucked air into an air purifying space. The electrostatic precipitator includes a charger and a dust collector. The charger includes a plurality of charging electrodes and an auxiliary electrode. The plurality of charging electrode include a discharge electrode and a ground electrode and configured to generate ions by corona discharge to charge airborne particulate matter. The auxiliary electrode is arranged upstream of the discharge electrode with respect to a ventilation direction, which is an airflow direction, and connected to the ground potential to discharge an ion current diffused upstream of the discharge electrode. The dust collector is configured to collect the airborne particulate matter charged by the ions by using Coulomb force.

## Description

### Technical Field

The disclosure relates to an air conditioner and an air purifier each including an electrostatic precipitator.

### Background Art

Air conditioners and the like include an electrostatic precipitator to remove dust from air. An electrostatic precipitator includes a charger that charges airborne particulate matter by using corona discharge and a dust collector that collects the charged airborne particulate matter by using electrostatic force. For example, Japanese Patent Application Laid-Open No. 2001-345199 discloses an ionizer including a discharge unit for emitting ions toward a target object (an object to be ionized) and a trapping means for trapping the ions emitted from the discharge unit, wherein the trapping means includes a trapping unit that traps ions and a trapping control unit that adjusts the amount of ions trapped by the trapping unit. Japanese Patent Application Laid-Open No. 2023-030053 discloses an electronic device used in the vicinity of a target object. The disclosed electronic device includes an electrical component, a wiring portion that transmits high-voltage power to the electrical component, a case that accommodates the electrical component and the wiring portion, and a cover portion that covers at least a portion of the electrical component. The electronic device may have at least one of a configuration in which the surface resistivity of the cover portion is 10⁴ Ω/sq. or more and 10¹¹ Ω/sq. or less or a configuration in which the surface resistivity of the case is 10⁴ Ω/sq. or more and 10¹¹ Ω/sq. or less.

### Disclosure of Invention

### Solution to Problem

An air conditioner according to an aspect of the disclosure includes an indoor heat exchanger configured to perform heat exchange with air sucked in from an air conditioning space, and an electrostatic precipitator configured to remove airborne particulate matter before discharging the air into the air conditioning space.

An air purifier according to an aspect of the disclosure includes an electrostatic precipitator configured to remove airborne particulate matter before discharging sucked air into an air purifying space.

The electrostatic precipitator includes a charger and a dust collector. The charger includes a plurality of charging electrodes and an auxiliary electrode. The plurality of charging electrode include a discharge electrode and a ground electrode and configured to generate ions by corona discharge to charge airborne particulate matter. The auxiliary electrode is arranged upstream of the discharge electrode with respect to a ventilation direction, which is an airflow direction, and connected to the ground potential to discharge an ion current diffused upstream of the discharge electrode. The dust collector is configured to collect the airborne particulate matter charged by the ions by using Coulomb force.

### Brief Description of Drawings

FIG. 1 is a perspective view schematically illustrating an overall configuration of an electrostatic precipitator according to an embodiment of the disclosure.
FIG. 2A is a schematic configuration diagram of a charger and a dust collector of an electrostatic precipitator according to an embodiment of the disclosure.
FIG. 2B is a schematic configuration diagram of an auxiliary electrode according to an embodiment of the disclosure.
FIG. 3 is a diagram illustrating the operation of the electrostatic precipitator according to an embodiment of the disclosure.
FIG. 4A is a diagram illustrating an example of a surface potential measuring method of an electrostatic precipitator.
FIG. 4B is a diagram illustrating an example of an ion amount measuring method of an electrostatic precipitator.
FIG. 5 is a graph showing a result of measuring a surface potential of an auxiliary electrode or a pre-filter by the surface potential measuring method illustrated in FIG. 4A.
FIG. 6A is a graph showing a result of measuring an amount of ions when no auxiliary electrode is arranged.
FIG. 6B is a graph showing a result of measuring an amount of ions when an auxiliary electrode is arranged.
FIG. 7 is a schematic configuration diagram of an electrostatic precipitator according to an embodiment of the disclosure.
FIG. 8A is a diagram illustrating a result of measuring a surface potential when only a white alumite mesh (10 µm) is present.
FIG. 8B is a diagram showing a result of measuring a surface potential when only a white alumite mesh (20 µm) is present.
FIG. 9 is a diagram showing performance for a purification area when a white alumite mesh is used as an auxiliary electrode in an electrostatic precipitator according to an embodiment of the disclosure.
FIG. 10 is a diagram illustrating an electrode configuration when a hard alumite rod is used as an auxiliary electrode in an electrostatic precipitator according to an embodiment of the disclosure.
FIG. 11A is a diagram showing a result of measuring a surface potential when only a hard alumite rod (20 µm) is present.
FIG. 11B is a diagram showing a result of measuring a surface potential when a hard alumite rod (20 µm) and a pre-filter are present.
FIG. 12 is a diagram showing performance for a purification area when a hard alumite rod is used as an auxiliary electrode in an electrostatic precipitator according to an embodiment of the disclosure.
FIG. 13 is a schematic configuration diagram of an air conditioner according to an embodiment of the disclosure.
FIG. 14 is a schematic configuration diagram of an air purifier according to an embodiment of the disclosure.

### Mode for the Invention

Various embodiments of the disclosure and terms as used therein are not intended to limit the technical features described in the disclosure to specific embodiments and should be understood as including various modifications, equivalents, or alternatives of the embodiments.

In connection with the description of the drawings, like reference numbers may be used to denote like or related elements.

A singular form of a noun corresponding to an item may include one or more items, unless the relevant context clearly indicates otherwise.

In the disclosure, the expressions "A or B," "at least one of A and B," "at least one of A or B," "A, B, or C," "at least one of A, B, and C," and "at least one of A, B, or C" may include any one of the items listed in the corresponding expression or all possible combinations thereof.

The term "and/or" as used herein includes a combination of a plurality of related recited elements or any one of a plurality of related recited elements.

The terms "first," "second," etc. as used herein may be only used to distinguish one element from another and do not limit the elements in any other aspects (e.g., importance or order).

When a certain (e.g., first) element is referred to as being "coupled" or "connected" to another (e.g., second) element with or without the terms "functionally" or "communicatively," it means that the certain element may be coupled or connected to the other element directly (e.g., by wire) or wirelessly or through a third element.

The terms "comprise" or "include" as used herein are inclusive and therefore specify the presence of stated features, integers, steps, operations, elements, components, or combinations thereof, but do not preclude the presence or addition of one or more other features, integers, steps, operations, elements, components, or combinations thereof.

It will be understood that when an element is referred to as being "connected to," "coupled to," "supported to," or "in contact with" another element, the element may be "directly connected to, coupled to, supported to, or in contact with" the other element or may be "indirectly connected to, coupled to, supported to, or in contact with" the other element through a third element.

It will be understood that when an element is referred to as being located "on" another element, the element may be in contact with the other element, and another element may also be present between the two elements.

An air conditioner according to various embodiments of the disclosure is a device that performs functions such as air purification, ventilation, humidity control, cooling, or heating in an air-conditioning space (hereinafter referred to as "indoor") and refers to a device having at least one of the functions.

According to an embodiment of the disclosure, the air conditioner may include a heat pump device so as to perform a cooling function or a heating function. The heat pump device may include a refrigeration cycle in which a refrigerant is circulated along a compressor, a first heat exchanger, an expansion device, and a second heat exchanger. All components of the heat pump device may be built into one housing that forms the exterior of the air conditioner, and window fit air conditioners or portable air conditioners are examples of such air conditioners. On the other hand, some components of the heat pump device may be separately built into a plurality of housings that form one air conditioner, and wall-mounted air conditioners, stand-type air conditioners, and system air conditioners are examples of such air conditioners.

An air conditioner including a plurality of housings may include at least one outdoor unit installed outdoors and at least one indoor unit installed indoors. For example, the air conditioner may be configured so that one outdoor unit is connected to one indoor unit through a refrigerant pipe. For example, the air conditioner may be configured so that one outdoor unit is connected to two or more indoor units through a refrigerant pipe. For example, the air conditioner may be configured so that two or more outdoor units are connected to two or more indoor units through a plurality of refrigerant pipes.

The outdoor unit may be electrically connected to the indoor unit. For example, information (or commands) for controlling the air conditioner may be input through an input interface provided in the outdoor unit or the indoor unit, and the outdoor unit and indoor unit may operate simultaneously or sequentially in response to user input.

The air conditioner may include an outdoor heat exchanger provided in the outdoor unit, an indoor heat exchanger provided in the indoor unit, and a refrigerant pipe connecting the outdoor heat exchanger and the indoor heat exchanger to each other.

The outdoor heat exchanger may perform heat exchange between the refrigerant and outdoor air by using the phase change of the refrigerant (e.g., evaporation or condensation). For example, while the refrigerant condenses in the outdoor heat exchanger, the refrigerant may release heat to outdoor air, and while the refrigerant flowing through the outdoor heat exchanger evaporates, the refrigerant may absorb heat from outdoor air.

The indoor unit is provided indoors. For example, the indoor unit may be classified into a ceiling-mounted indoor unit, a stand-type indoor unit, and a wall-mounted indoor unit according to the method of arranging the indoor unit. For example, the ceiling-mounted indoor unit may be classified into a 4-way type indoor unit, a 1-way type indoor unit, a duct type indoor unit, and the like according to the method of discharging air.

Similarly, the indoor heat exchanger may perform heat exchange between the refrigerant and indoor air by using the phase change of the refrigerant (e.g., evaporation or condensation). For example, while the refrigerant evaporates in the indoor unit, the refrigerant may absorb heat from indoor air, and the indoor space may be cooled by blowing the indoor air cooled while passing through the cooled indoor heat exchanger. In addition, while the refrigerant condenses in the indoor heat exchanger, the refrigerant may release heat to indoor air, and the indoor space may be heated by blowing the indoor air heated while passing through the high-temperature indoor heat exchanger.

That is, the air conditioner performs a cooling or heating function through a phase change process of the refrigerant circulating between the outdoor heat exchanger and the indoor heat exchanger. For the circulation of the refrigerant, the air conditioner may include a compressor that compresses the refrigerant. The compressor may suck in refrigerant gas through a suction port and compress the refrigerant gas. The compressor may discharge high-temperature and high-pressure refrigerant gas through a discharge port. The compressor may be provided inside the outdoor unit.

The refrigerant may circulate through the refrigerant pipe in the order of the compressor, the outdoor heat exchanger, the expansion device, and the indoor heat exchanger, or in the order of the compressor, the indoor heat exchanger, the expansion device, and the outdoor heat exchanger.

For example, when one outdoor unit and one indoor unit are directly connected to each other through a refrigerant pipe in the air conditioner, a refrigerant may be provided to circulate between the one outdoor unit and the one indoor unit through the refrigerant pipe.

For example, when one outdoor unit is connected to two or more indoor units through a refrigerant pipe in the air conditioner, refrigerants may flow into a plurality of indoor units through a plurality of refrigerant pipes branched from the outdoor unit. The refrigerants discharged from the indoor units may be joined and circulated to the outdoor unit. For example, the indoor units may be directly connected in parallel to one outdoor unit through separate refrigerant pipes.

The indoor units may operate independently according to an operation mode set by a user. That is, some indoor units may operate in a cooling mode and other indoor units may operate in a heating mode. At this time, the refrigerant may be selectively introduced into each indoor unit in a high or low pressure state along a circulation path designated through a flow path switching valve to be described below and may be discharged and circulated to the outdoor unit.

For example, when two or more outdoor units and two or more indoor units are connected to each other through a plurality of refrigerant pipes in the air conditioner, refrigerants discharged from the outdoor units may join and flow through a single refrigerant pipe, may branch off again at a certain point, and may flow into the indoor units.

All the outdoor units may be driven or at least some of the outdoor units may not be driven, depending on the operating load according to the operating amount of the indoor units. At this time, the refrigerant may be introduced into the outdoor unit selectively driven through the flow path switching valve and may be then circulated. The air conditioner may include the expansion device so as to reduce the pressure of refrigerant introduced into the heat exchanger. For example, the expansion device may be arranged inside the indoor unit or the outdoor unit, or may be arranged in both the indoor unit and the outdoor unit.

The expansion device may lower the temperature and pressure of the refrigerant by using, for example, a throttling effect. The expansion device may include an orifice capable of reducing the cross-sectional area of the flow path. The temperature and pressure of the refrigerant having passed through the orifice may be lowered.

The expansion device may be implemented as, for example, an electronic expansion valve capable of controlling an opening ratio (the ratio of the cross-sectional area of the flow path of the valve in a partially open state to the cross-sectional area of the flow path of the valve in a fully open state). The amount of refrigerant passing through the expansion device may be controlled depending on the opening ratio of the electronic expansion valve.

The air conditioner may further include a flow path switching valve arranged on a refrigerant circulation flow path. The flow path switching valve may include, for example, a 4-way valve. The flow path switching valve may determine a refrigerant circulation path depending on an operation mode of the indoor unit (e.g., a cooling operation or a heating operation). The flow path switching valve may be connected to a discharge portion of the compressor.

The air conditioner may include an accumulator. The accumulator may be connected to a suction portion of the compressor. Low-temperature and low-pressure refrigerant that has been evaporated in the indoor heat exchanger or the outdoor heat exchanger may be introduced into the accumulator.

When the refrigerant, which is a mixture of refrigerant liquid and refrigerant gas, is introduced into the accumulator, the accumulator may separate the refrigerant liquid from the refrigerant gas, and may provide, to the compressor, the refrigerant gas from which the refrigerant liquid has been separated.

An outdoor fan may be provided in the vicinity of the outdoor heat exchanger. The outdoor fan may blow outdoor air to the outdoor heat exchanger so as to promote heat exchange between the refrigerant and the outdoor air.

The outdoor unit of the air conditioner may include at least one outdoor unit sensor. For example, the outdoor unit sensor may include an environmental sensor. The outdoor unit sensor may be arranged at any position inside or outside the outdoor unit. For example, the outdoor unit sensor may include a temperature sensor that detects air temperature around the outdoor unit, a humidity sensor that detects air humidity around the outdoor unit, a refrigerant temperature sensor that detects refrigerant temperature of the refrigerant pipe passing through the outdoor unit, or a refrigerant pressure sensor that detects refrigerant pressure of the refrigerant pipe passing through the outdoor unit.

The outdoor unit of the air conditioner may include an outdoor unit communication module. The outdoor unit communication module may be provided to receive a control signal from a controller of the indoor unit of the air conditioner, which will be described below. The outdoor unit may control the operation of the compressor, the outdoor heat exchanger, the expansion device, the flow path switching valve, the accumulator, or the outdoor fan, based on the control signal received through the outdoor unit communication module. The outdoor unit may transmit a sensing value detected from the outdoor unit sensor to the controller of the indoor unit through the outdoor unit communication module.

The indoor unit of the air conditioner may include a housing, an air blower that circulates air to the inside or outside the housing, and an indoor heat exchanger that exchanges heat with air introduced into the inside of the housing.

The housing may include a suction port. Indoor air may be introduced into the housing through the suction port.

The indoor unit of the air conditioner may include a filter provided to filter out foreign materials in the air introduced into the housing through the suction port.

The housing may include a discharge port. Air flowing inside the housing may be discharged to the outside of the housing through the discharge port.

The housing of the indoor unit may include an airflow guide that guides the direction of air discharged through the discharge port. For example, the airflow guide may include blades located on the discharge port. For example, the airflow guide may include an auxiliary fan that regulates discharge airflow. The disclosure is not limited thereto, and the airflow guide may be omitted.

The indoor heat exchanger and the air blower, which are arranged on a path connecting the suction port to the discharge port, may be provided inside the housing of the indoor unit.

The air blower may include an indoor fan and a fan motor. For example, the indoor fan may include an axial flow fan, a radial flow fan, a cross flow fan, or a centrifugal fan.

The indoor heat exchanger may be arranged between the air blower and the discharge port or between the suction port and the air blower. The indoor heat exchanger may absorb heat from air introduced through the suction port or may transfer heat to air introduced through the suction port. The indoor heat exchanger may include heat exchange pipes through which the refrigerant flows, and heat exchange fins in contact with the heat exchange pipes so as to increase a heat transfer area.

The indoor unit of the air conditioner may include a drain tray arranged below the indoor heat exchanger so as to collect condensate generated in the indoor heat exchanger. The condensate collected in the drain tray may be drained to the outside through a drain hose. The drain tray may be provided to support the indoor heat exchanger.

The indoor unit of the air conditioner may include an input interface. The input interface may include any type of user input means, including a button, a switch, a touch screen, and/or a touch pad. The user may directly input setting data (e.g., desired indoor temperature, operation mode setting for cooling/heating/dehumidification/air purification, outlet selection setting, and/or wind volume setting) through the input interface.

The input interface may also be connected to an external input device. For example, the input interface may be electrically connected to a wired remote controller. The wired remote controller may be installed at a specific position (e.g., a portion of a wall) in an indoor space. The user may input setting data regarding the operation of the air conditioner by operating the wired remote controller. An electrical signal corresponding to the setting data obtained through the wired remote controller may be transmitted to the input interface. In addition, the input interface may include an infrared sensor. The user may remotely input setting data regarding the operation of the air conditioner by using a wireless remote controller. The setting data input through the wireless remote controller may be transmitted to the input interface as an infrared signal.

In addition, the input interface may include a microphone. A user's voice commands may be obtained through the microphone. The microphone may convert the user's voice commands into electrical signals and transmit the converted electrical signals to the indoor unit controller. The indoor unit controller may control the components of the air conditioner to execute functions corresponding to the user's voice commands. The setting data (e.g., desired indoor temperature, operation mode setting for cooling/heating/dehumidification/air purification, outlet selection setting, and/or wind volume setting) obtained through the input interface may be transmitted to the indoor unit controller to be described below. For example, the setting data obtained through the input interface may be transmitted to the outside, i.e., to the outdoor unit or the server, through the indoor unit communication module to be described below.

The indoor unit of the air conditioner may include a power module. The power module may be connected to an external power source to supply power to the components of the indoor unit.

The indoor unit of the air conditioner may include an indoor unit sensor. The indoor unit sensor may be an environmental sensor arranged in a space inside or outside the housing. For example, the indoor unit sensor may include one or more temperature sensors and/or humidity sensors arranged in a predetermined space inside or outside the housing of the indoor unit. For example, the indoor unit sensor may include a refrigerant temperature sensor that senses the temperature of the refrigerant in the refrigerant pipe passing through the indoor unit. For example, the indoor unit sensor may include refrigerant temperature sensors that respectively sense the suction port, middle, and/or outlet temperatures of the refrigerant pipe passing through the indoor heat exchanger.

For example, environmental information sensed by the indoor unit sensor may be transmitted to the indoor unit controller to be described below or may be transmitted to the outside through the indoor unit communication module to be described below.

The indoor unit of the air conditioner may include an indoor unit communication module. The indoor unit communication module may include at least one of a short-range wireless communication module or a long-range wireless communication module. The indoor unit communication module may include at least one antenna that wirelessly communicates with other devices. The outdoor unit may include an outdoor unit communication module. The outdoor unit communication module may include at least one of a short-range wireless communication module or a long-range wireless communication module.

The short-range wireless communication module may include a Bluetooth communication module, a Bluetooth Low Energy (BLE) communication module, a near field communication (NFC) module, a wireless local area network (WLAN) (Wi-Fi) communication module, a ZigBee communication module, an Infrared Data Association (IrDA) communication module, a Wi-Fi Direct (WFD) communication module, an Ultra-Wideband (UWB) communication module, an Ant+ communication module, a microwave (µWave) communication module, and the like, but the disclosure is not limited thereto.

The long-range wireless communication module may include a communication module that performs various types of long-range wireless communication and may include a mobile communication module. The mobile communication module may transmit and receive radio signals to and from at least one of a base station, an external terminal, or a server on a mobile communication network.

The indoor unit communication module may communicate with an external device, such as a server, a mobile device, or other home appliances, through a peripheral access point (AP). The AP may connect a LAN, to which the air conditioner or a user equipment is connected, to a wide area network (WAN), to which the server is connected. The air conditioner or the user equipment may be connected to the server through the WAN. The indoor unit of the air conditioner may include an indoor unit controller that controls components of the indoor unit, including an air blower and the like. The outdoor unit of the air conditioner may include an outdoor unit controller that controls components of the outdoor unit, including a compressor and the like. The indoor unit controller may communicate with the outdoor unit controller through the indoor unit communication module and the outdoor unit communication module. The outdoor unit communication module may transmit a control signal generated by the outdoor unit controller to the indoor unit communication module, or may transmit a control signal transmitted from the indoor unit communication module to the outdoor unit controller. That is, the outdoor unit and indoor unit may perform bidirectional communication. The outdoor unit and the indoor unit may transmit and receive various signals generated during the operation of the air conditioner.

The outdoor unit controller may be electrically connected to the components of the outdoor unit and control the operations of the components of the outdoor unit. For example, the outdoor unit controller may adjust the frequency of the compressor and control the flow path switching valve to switch the refrigerant circulation direction. The outdoor unit controller may control the rotation speed of the outdoor fan. In addition, the outdoor unit controller may generate a control signal for adjusting the opening degree of the expansion valve. Under the control of the outdoor unit controller, the refrigerant may be circulated along a refrigerant circulation circuit including the compressor, the flow path switching valve, the outdoor heat exchanger, the expansion valve, and the indoor heat exchanger.

Various temperature sensors included in the outdoor unit and indoor unit may transmit, to the outdoor unit controller and/or the indoor unit controller, electrical signals corresponding to the sensed temperatures. For example, humidity sensors included in the outdoor unit and indoor unit may transmit, to the outdoor unit controller and/or the indoor unit controller, electrical signals corresponding to the sensed humidity.

The indoor unit controller may obtain user input from a user device, including a mobile device or the like, through the indoor unit communication module and may obtain user input directly through the input interface or through a remote controller. The indoor unit controller may control the components of the indoor unit, including the air blower and the like, in response to the received user input. The indoor unit controller may transmit information about the received user input to the outdoor unit controller of the outdoor unit.

The outdoor unit controller may control the components of the outdoor unit, including the compressor and the like, based on information about the user input received from the indoor unit. For example, when a control signal corresponding to user input of selecting an operation mode, such as a cooling operation, a heating operation, an air blowing operation, a defrosting operation, or a dehumidifying operation, is received from the indoor unit, the outdoor unit controller may control the components of the outdoor unit so that the operation of the air conditioner corresponding to the selected operation mode is performed.

The outdoor unit controller and the indoor unit controller may each include a processor and a memory. The indoor unit controller may include at least one first processor and at least one first memory, and the outdoor unit controller may include at least one second processor and at least one second memory.

The memory may memorize/store various pieces of information necessary for the operation of the air conditioner. The memory may store instructions, applications, data and/or programs necessary for the operation of the air conditioner. For example, the memory may store various programs for the cooling operation, the heating operation, the dehumidifying operation, and/or the defrosting operation of the air conditioner. The memory may include volatile memory, such as static random access memory (SRAM) and dynamic random access memory (DRAM), which temporarily stores data. In addition, the memory may include non-volatile memory, such as read-only memory (ROM), erasable programmable read-only memory (EPROM), and electrically erasable programmable read-only memory (EEPROM), which stores data for long period of time.

The processor may generate control signals for controlling the operation of the air conditioner, based on the instructions, the applications, the data, and/or the programs stored in the memory. The processor is hardware that may include logic circuits and arithmetic circuits. The processor may process data according to the programs and/or instructions provided from the memory and may generate control signals according to a result of the processing. The memory and the processor may be implemented as a single control circuit or a plurality of circuits.

The indoor unit of the air conditioner may include an output interface. The output interface may be electrically connected to the indoor unit controller and may output information related to the operation of the air conditioner under the control of the indoor unit controller. For example, information such as the operation mode, wind direction, wind volume, and temperature selected by user input may be output. In addition, the output interface may output sensing information and warning/error messages obtained from the indoor unit sensor or the outdoor unit sensor.

The output interface may include a display and a speaker. The speaker is an audio device that may output various sounds. The display may display information input by the user or information provided to the user by using various graphic elements. For example, operation information of the air conditioner may be displayed as at least one of an image or text. In addition, the display may include an indicator that provide specific information. The display may include a liquid crystal display (LCD) panel, a light-emitting diode (LED) panel, an organic light-emitting diode (OLED) panel, a micro LED panel, and/or a plurality of LEDs.

The air conditioner may include a dust collector that removes airborne particulate matter before discharging air into an air conditioning space, for example, an indoor space. In addition, an air purifier is a device that sucks in polluted air from an air purifying space, such as an indoor space, purifies the sucked polluted air, and then discharges the purified air back to the indoor space. The air purifier may include various purification devices. The purification device may include a dust collector that removes airborne particulate matter before discharging air into the indoor space.

As an environmental load reduction-type dust collector that does not require disposal or replacement, there is an electrostatic precipitator that collects airborne particulate matter by charging the airborne particulate matter through corona discharge, etc. The electrostatic precipitator may include a charger that charges airborne particulate matter by using electric discharge, and a dust collector that collects the charged airborne particulate matter by using Coulomb force. In order to improve the charging efficiency in the charger arranged in front of the dust collector, two charging methods, diffusion charging and field charging, are introduced so that charged particulate matter may be diffused over a wide space. However, the charging performance of the charger may become unstable because the peripheral pre-filter or grill is charged up by the diffused charged particulate matter. In addition, a wide ion diffusion space is required upstream of the discharge electrode in order to suppress charging of the peripheral members, such as the pre-filter or the grill.

The disclosure provides an electrostatic precipitator capable of stabilizing charging performance without deteriorating charging performance in a limited space inside an air conditioner or an air purifier, and an air conditioner and an air purifier including the same. The disclosure provides an electrostatic precipitator capable of suppressing charging to a peripheral member without requiring a large ion diffusion space, and an air conditioner and an air purifier including the same. The technical problems to be solved by the disclosure are not limited to those described above, and other technical problems that are not mentioned herein will be clearly understood by those of ordinary skill in the art from the following description.

Hereinafter, an electrostatic precipitator, and an air conditioner and an air purifier including the same according to an embodiment of the disclosure will be described in detail, so that those of ordinary skill in the art may easily carry out the disclosure. However, the disclosure may be implemented in various different forms and is not limited to an embodiment of the disclosure described herein. In order to clearly explain the disclosure, parts irrelevant to the description are omitted in the drawings and similar reference numerals denote similar parts throughout the specification.

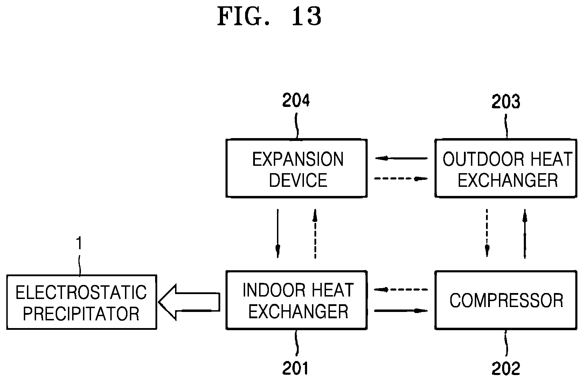

FIG. 13 is a schematic configuration diagram of an air conditioner according to an embodiment of the disclosure. The air conditioner sucks in air from an air conditioning space (e.g., an indoor space), regulates a temperature of the sucked air, and then discharges the air back into the air conditioning space.

Referring to FIG. 13, the air conditioner may include an indoor heat exchanger 201, a compressor 202, an outdoor heat exchanger 203, and an expansion device 204. The indoor heat exchanger 201, the compressor 202, the outdoor heat exchanger 203, and the expansion device 204 may be connected to each other by refrigerant pipes.

The outdoor heat exchanger 203 may be installed in an outdoor unit and may perform heat exchange between the refrigerant and outdoor air by using the phase change of the refrigerant (e.g., evaporation or condensation). For example, while the refrigerant condenses in the outdoor heat exchanger 203, the refrigerant may release heat to outdoor air, and while the refrigerant flowing through the outdoor heat exchanger 203 evaporates, the refrigerant may absorb heat from outdoor air.

The indoor heat exchanger 201 may perform heat exchange with air sucked in from the air conditioning space. The indoor heat exchanger 201 may be installed in an indoor unit and may perform heat exchange between the refrigerant and indoor air by using the phase change of the refrigerant (e.g., evaporation or condensation). For example, while the refrigerant evaporates in the indoor heat exchanger 201, the refrigerant may absorb heat from indoor air, and the indoor space may be cooled by blowing the indoor air cooled while passing through the indoor heat exchanger 201. In addition, while the refrigerant condenses in the indoor heat exchanger 201, the refrigerant may release heat to indoor air, and the indoor space may be heated by blowing the indoor air heated while passing through the indoor heat exchanger 201.

The compressor 202 may compress refrigerant gas between the indoor heat exchanger 201 and the outdoor heat exchanger 203. The expansion device 204 may lower the pressure of the refrigerant between the indoor heat exchanger 201 and the outdoor heat exchanger 203. In a cooling mode, the refrigerant may circulate in the order of the compressor 202, the outdoor heat exchanger 203, the expansion device 204, and the indoor heat exchanger 201, the outdoor heat exchanger 203 may function as a condenser, and the indoor heat exchanger 201 may function as an evaporator. In a heating mode, the refrigerant may circulate in the order of the compressor 202, the indoor heat exchanger 201, the expansion device 204, and the outdoor heat exchanger 203, the outdoor heat exchanger 203 may function as an evaporator, and the indoor heat exchanger 201 may function as a condenser.

The air conditioner may include an electrostatic precipitator 1 that removes airborne particulate matter (e.g., dust, etc.) before air sucked from the air conditioning space is discharged to the air conditioning space (e.g., an indoor space). The electrostatic precipitator 1 is described in detail below. The electrostatic precipitator 1 may be disposed between the air suction port and the air discharge port of the air conditioner.

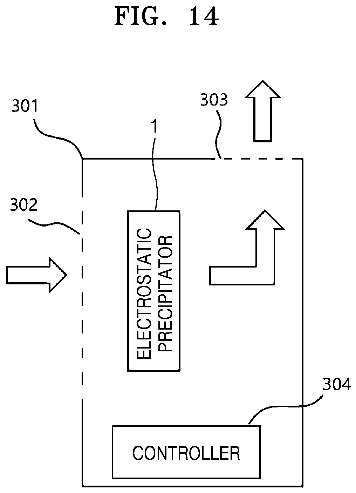

The air purifier is a device that sucks in polluted air, purifies the sucked air, and then discharges the purified air. FIG. 14 is a schematic configuration diagram of an air purifier according to an embodiment of the disclosure. Referring to FIG. 14, the air purifier may include a housing 301. The housing 301 may form an airflow path. The housing 301 may function as, for example, a duct. The housing 301 may include an air suction port 302 and an air discharge port 303. Air may be sucked into the housing 301 through the air suction port 302 and discharged from the housing 301 through the air discharge port 303.

An electrostatic precipitator 1 may be arranged inside the housing 301. The electrostatic precipitator 1 may remove airborne particulate matter (e.g., dust, etc.) before the sucked air is discharged from the housing 301 to the air purifying space. The electrostatic precipitator 1 is described in detail below. The electrostatic precipitator 1 may be disposed between the air suction port 302 and the air discharge port 303 of the air purifier.

In FIG. 14, the air suction port 302 is illustrated as being provided on the front side of the housing 301, but the disclosure is not limited thereto, and the air suction port 302 may also be provided on the upper side, the lateral side, etc. of the housing 301. In addition, in FIG. 14, the air discharge port 303 is illustrated as being provided on the upper side of the housing 301, but the disclosure is not limited thereto, and the air discharge port 303 may also be provided across the upper side and the rear side of the housing 301. Although not illustrated, the air purifier may further include an air blower that generates airflow.

The controller 304 may control the operation of the air purifier. The controller 304 may include a processor and a memory. The memory may memorize/store various pieces of information necessary for the operation of the air purifier. The processor may generate control signals for controlling the operation of the air purifier, based on data and/or the programs stored in the memory. The memory and the processor may be implemented as a single control circuit or a plurality of circuits. For example, the controller 304 may include an operation control circuit that controls the operation of the air purifier, a user interface including an input interface that receives user input and an output interface that displays a control state, a motor control circuit that controls an air blower, a power control module, and the like.

Although not illustrated, the air purifier may include one or more functional filters. Examples of the functional filters may include a deodorizing filter that removes odors, volatile organic compounds (VOCs), etc., and a biofilter that removes biological materials, such as viruses and bacteria.

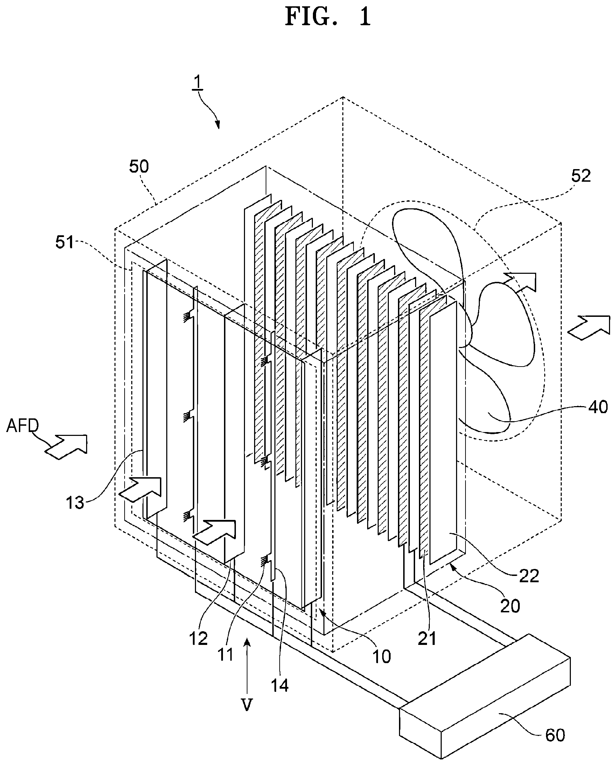

FIG. 1 is a perspective view schematically illustrating an overall configuration of an electrostatic precipitator 1 according to an embodiment of the disclosure. Referring to FIG. 1, the electrostatic precipitator 1 includes a charger 10 and a dust collector 20. The fan 40 forms an airflow passing through the charger 10 and the dust collector 20. The charger 10, the dust collector 20, and the fan 40 may be accommodated in a case 50. The electrostatic precipitator 1 may include a high-voltage power source 60 that supplies a high voltage to the charger 10 and the dust collector 20. In FIG. 1, the case 50 is illustrated with a broken line so that the configuration of the charger 10 and the dust collector 20 installed inside the case 50 is visible.

The electrostatic precipitator 1 is a two-stage electrostatic precipitator in which the functions of the charger 10 and the dust collector 20 are separated from each other. The charger 10 and the dust collector 20 may be in the form of a replaceable module. An arrow mark AFD indicates the direction of airflow (ventilation direction) to be treated. The fan 40 may form airflow passing through the electrostatic precipitator 1. For example, the fan 40 may be installed on the downstream side, i.e., the leeward side, of the dust collector 20 with respect to the ventilation direction AFD.

The charger 10 is a charging device that charges airborne particulate matter. The charger 10 includes a plurality of charging electrodes and an auxiliary electrode 13. A plurality of charging electrodes generate ions by corona discharge to charge airborne particulate matter. The charging electrodes include a plurality of discharge electrodes 11 and a ground electrode 12. The auxiliary electrode 13 is arranged upstream of the discharge electrode 11 with respect to an airflow direction to discharge an ion current diffused toward the upstream side of the discharge electrode 11. The charger 10 may further include a feeding member 14 that supplies, to the discharge electrodes 11, a high voltage supplied from the high-voltage power source 60. The discharge electrode 11, the ground electrode 12, and the auxiliary electrode 13 are described in detail below.

The dust collector 20 is a dust collection device that uses Coulomb force to collect airborne particulate matter charged by the charger 10. In an embodiment of the disclosure, the dust collector 20 is disposed on the downstream side of the charger 10 with respect to the ventilation direction AFD. The dust collector 20 may include high-voltage electrodes 21 and collection electrodes 22 that are alternately stacked. The high-voltage electrode 21 may be a plate-shaped electrode member, the surface of which is coated with a film formed of an insulating material. The collection electrode 22 faces the high-voltage electrode 21. The collection electrode 22 may be a plate-shaped electrode member having conductivity. The dust collector 20 may include a dust collection film. Hereinafter, the dust collector 20 including the dust collection film is described as an example.

In the case 50, an entrance portion 51 may be provided on the upstream side (windward side), i.e., on the charger 10 side, and an exit portion 52 may be provided on the downstream side (leeward side), i.e., on the dust collector 20 side, with respect to the ventilation direction AFD. A mesh, a net, a grid, or the like may be installed at the entrance portion 51. The mesh or the like installed at the entrance portion 51 may have a structure that prevents a user from coming into contact with the charger 10 and has a low airflow resistance. A pre-filter that prevents the intrusion of large particles may be installed at the entrance portion 51. The case 50 may include, for example, a resin material, such as acrylonitrile butadiene styrene (ABS) copolymer.

The fan 40 may be installed at the exit portion 52 of the case 50. Air enters the case 50 through the entrance portion 51 of the case 50 on the charger 10 side, passes through the charger 10 and the dust collector 20, and is then discharged from the case 50 through the exit portion 52.

The high-voltage power source 60 may generate electric discharge, i.e., corona discharge, between the discharge electrode 11 and the ground electrode 12 by applying a direct current (DC) high voltage between the discharge electrode 11 and the ground electrode 12. As ions generated by the corona discharge are attached to the airborne particulate matter, the airborne particulate matter may be charged. That is, the airborne particulate matter has electric charge. The high-voltage power source 60 that applies a high voltage between the discharge electrode 11 and the ground electrode 12 may be a portion of the charger 10.

The high-voltage power source 60 may apply the DC high voltage between the high-voltage electrode 21 and the collection electrode 22. The airborne particulate matter charged by the charger 10 is attached to the surface of the collection electrode 22 by electrostatic force, i.e., Coulomb force. Due to this, the airborne particulate matter may be collected in the electrostatic precipitator 1. The high-voltage power source 60 that applies a high voltage between the high-voltage electrode 21 and the collection electrode 22 may be a portion of the dust collector 20.

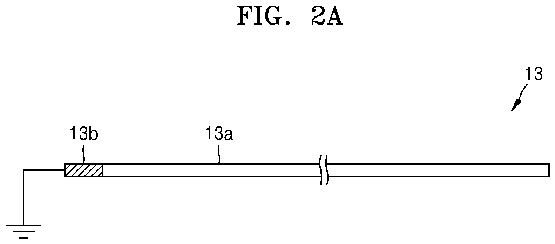

FIG. 2A is a schematic configuration diagram of a charger 10 and a dust collector 20 of an electrostatic precipitator 1 according to an embodiment of the disclosure. FIG. 2A is a cross-sectional view of the charger 10 and the dust collector 20 illustrated in FIG. 1, when viewed from viewpoint V. Referring to FIG. 2A, the charger 10 may include an auxiliary electrode 13 and a plurality of charging electrodes including discharge electrodes 11 and ground electrodes 12. The dust collector 20 may include a dust collection film 200.

The discharge electrode 11 is an electrode that generates ions by corona discharge so as to charge airborne particulate matter. A high voltage is applied to the discharge electrode 11. The discharge electrode 11 may include at least one of a wire-shaped conductive member, a needle-shaped conductive member, a saw-toothed conductive member, or a plurality of fiber-shaped conductive members.

The ground electrode 12 is an electrode that faces the discharge electrode 11 and defines a ground potential in a charging region, and is maintained at the ground potential. The ground electrode 12 may include at least one of a flat plate-shaped conductive member or a rod-shaped conductive member.

The auxiliary electrode 13 may be arranged to face a direction substantially perpendicular to the ventilation direction AFD on the upstream side of the discharge electrode 11, i.e., the windward side, with respect to the ventilation direction AFD, which is the airflow direction. The auxiliary electrode 13 is an electrode that discharges an ion current diffused into the windward region of the discharge electrode 11. The auxiliary electrode 13 may have a structure in which, even when the auxiliary electrode 13 is charged by ions generated by corona discharge, the charge is immediately attenuated. Accordingly, ions generated by corona discharge may not spread to the upstream side of the auxiliary electrode 13 with respect to the ventilation direction AFD.

The auxiliary electrode 13 may include a mesh-shaped electrode. The auxiliary electrode 13 may include a plurality of rod-shaped electrodes. The mesh-shaped electrode is an example of a flat plate-shaped electrode having a plurality of openings.

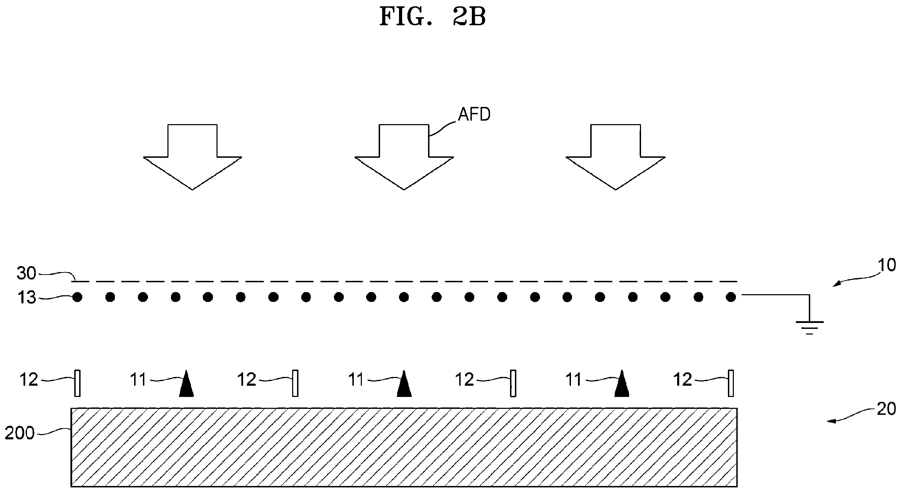

FIG. 2B illustrates an embodiment of the auxiliary electrode 13. FIG. 2B illustrates an example of one of a plurality of rod-shaped electrodes constituting the auxiliary electrode 13. Referring to FIG. 2B, the auxiliary electrode 13 may include a main region 13a including an insulating member and an end region 13b including a conductive member and connected to a ground potential. The main region 13a is a region through which airflow passes, and the end region 13b is an edge region of the auxiliary electrode 13 and is connected to the main region 13a. In an embodiment of the disclosure, the main region 13a may include an insulating member and the end region 13b may include a conductive member. In an embodiment of the disclosure, the auxiliary electrode 13 may include a conductive member. In this case, the main region 13a may be surface-treated by an insulating member, and the end region 13b may be a region where the conductive member is exposed.

For example, the end region 13b of the mesh-shaped electrode or the rod-shaped electrodes may include a conductive member, and the main region 13a, which is the remaining region except for the end region 13b, may include an insulating member. For example, the mesh-shaped electrode or the rod-shaped electrodes may include a conductive member as a whole, and the main region 13a, which is the remaining region except for the end region 13b, may be surface-treated by an insulating member.

The insulating member may be a member including a static electricity dissipative material. The static electricity dissipative material is a material that is difficult to charge and is attenuated relatively quickly even when charged. The static electricity dissipative material does not cause violent electrostatic discharge even when a charged object comes into contact therewith. The surface resistivity of the static electricity dissipative material may be, for example, 10⁴ Ω/sq to 10¹² Ω/sq. The static electricity dissipative material may include, for example, at least one of alumite-treated aluminum (hereinafter, referred to as "alumite"), zirconia, cationic polymer, semiconductive silicon rubber, extruded foamed polyethylene, or crosslinked polyethylene. The static electricity dissipative material may have a surface with a porous structure. Typically, the alumite has a surface with a porous structure. Experiments show that most of the alumites are not charged. This is presumed to be due to the porous structure of the alumite. The alumite has a two-layer structure of a barrier layer and a porous coating layer formed by performing a reaction at an interface between an electrolyte and an aluminum base. Because micropores of the porous coating layer are generally sealed but are not completely blocked, electric charges are discharged through the micropores, and thus, are not accumulated on the surface.

Although the pre-filter 30 that suppresses intrusion of large-sized particles is illustrated in FIG. 2A, the pre-filter 30 is not an element of the charger 10 and the dust collector 20. Therefore, it may be considered that the auxiliary electrode 13 is arranged at the uppermost stream within the charger 10 with respect to the ventilation direction AFD.

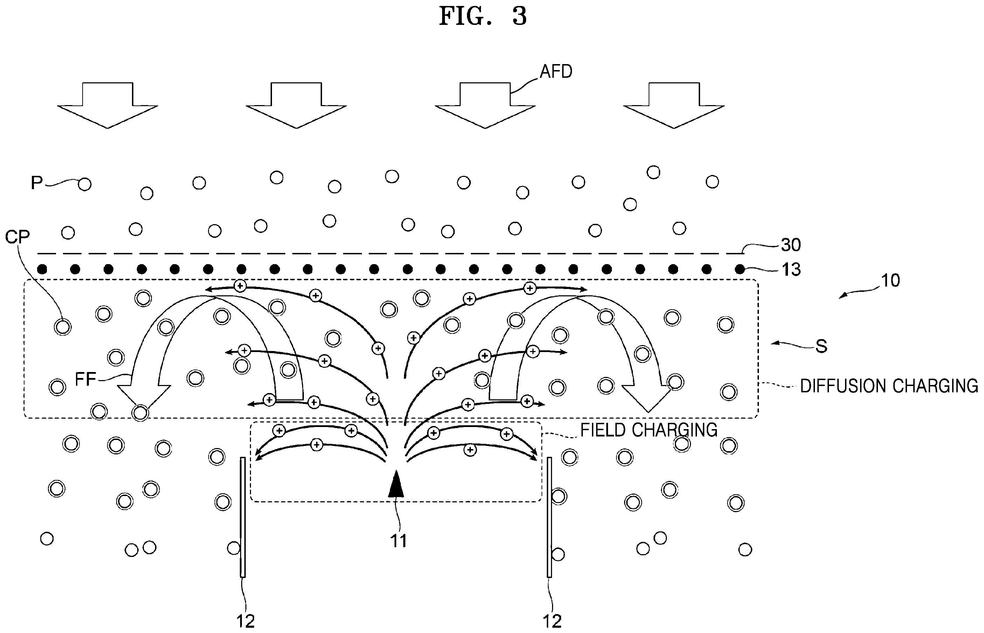

FIG. 3 is a diagram illustrating the operation of the electrostatic precipitator 1 according to an embodiment of the disclosure. Referring to FIG. 3, in the charger 10 of the electrostatic precipitator 1 according to an embodiment of the disclosure, ions are generated by corona discharge between the discharge electrode 11 and the ground electrode 12, and airborne particulate matter P to be treated are charged by the field charging and diffusion charging. Charged particulate matter CP, which is the charged airborne particulate matter, flows downstream by fountain flow as indicated by an arrow FF. Ions flowing toward the auxiliary electrode 13 in an ion diffusion space S flow to the ground by the auxiliary electrode 13. Accordingly, ions do not diffuse upstream of the auxiliary electrode 13, and charging of the pre-filter 30 or other objects by ions may be suppressed.

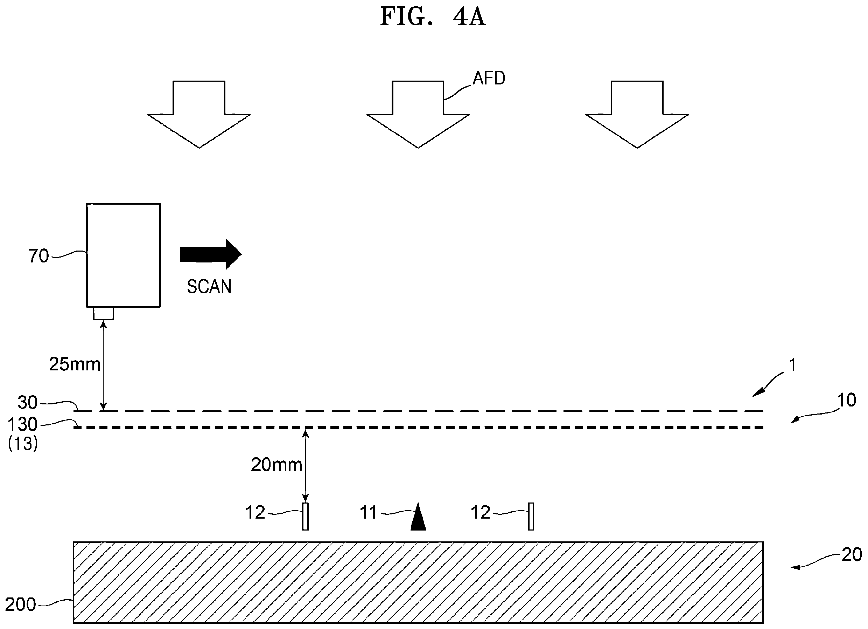

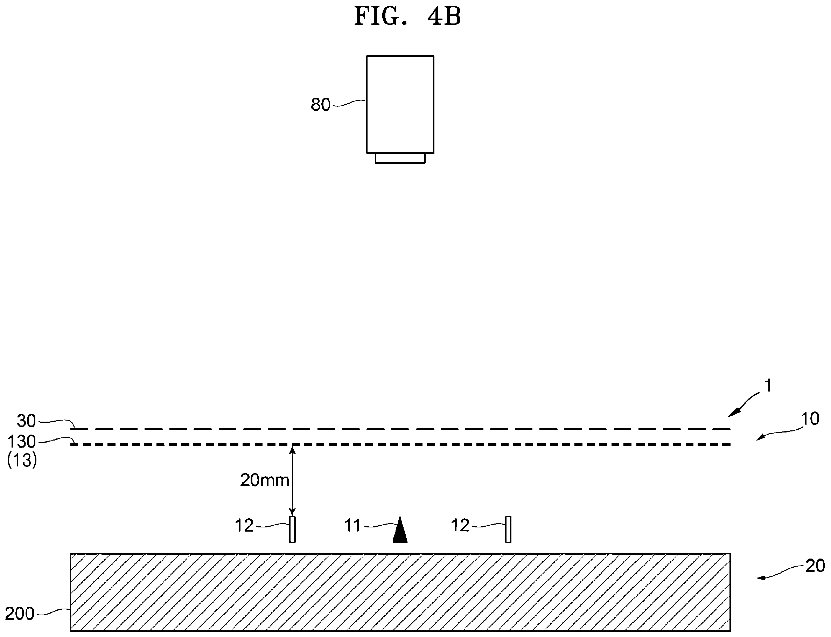

In order to describe the effect by the auxiliary electrode 13, a result of measuring the surface potential and the amount of ions in the electrostatic precipitator 1 is described. FIG. 4A is a diagram illustrating an example of a surface potential measuring method of an electrostatic precipitator, and FIG. 4B is a diagram illustrating an example of an ion amount measuring method of an electrostatic precipitator. Referring to FIGS. 4A and 4B, a charger 10 may include a discharge electrode 11 and a ground electrode 12 as charging electrodes, and a dust collector 20 may include a dust collection film 200. The electrostatic precipitator 1 may have a two-stage structure in which a charger 10 is arranged on an upstream side with respect to a ventilation direction AFD and the dust collector 20 is arranged downstream of the charger 10. An auxiliary electrode 13 may be arranged at a position 20 mm upstream away from the charging electrode of the charger 10 with respect to the ventilation direction AFD. An alumite mesh 130 having a thickness of 10 µm and a surface resistivity of 10⁹ Ω/sq. to 10¹¹ Ω/sq. may be used as the auxiliary electrode 13. A pre-filter 30 may be arranged upstream of the auxiliary electrode 13. As illustrated in FIG. 4A, the surface potential is measured while moving an electrostatic measuring device 70 in a direction perpendicular to the ventilation direction AFD at a position 25 mm upstream away from the pre-filter 30. As illustrated in FIG. 4B, the amount of ions may be measured by using an ion amount measuring device 80 on the upstream side of the electrostatic precipitator 1.

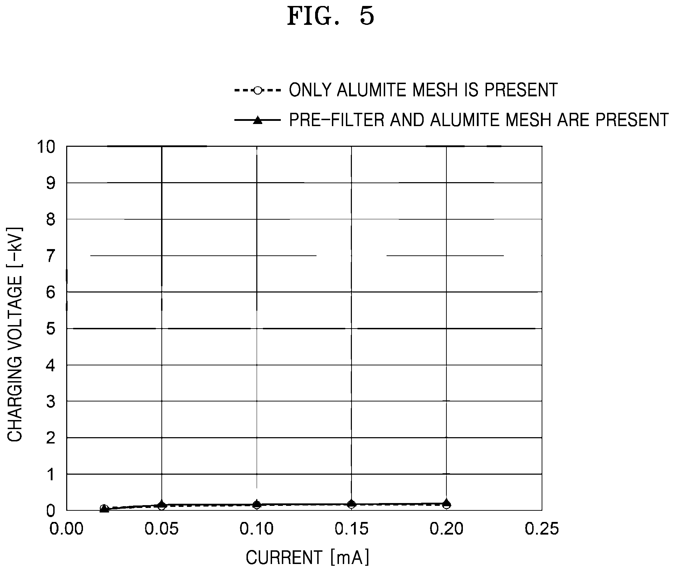

FIG. 5 is a graph showing a result of measuring the surface potential of the auxiliary electrode 13 or the pre-filter 30 by the method illustrated in FIG. 4A. In FIG. 5, the expression "only the alumite mesh is present" represents the surface potential (charging voltage) of the alumite mesh 130 measured by using the electrostatic measuring device 70 while the pre-filter 30 is separated. The expression "the pre-filter and the alumite mesh are present" represents the surface potential (charging voltage) of the pre-filter 30 measured by using the electrostatic measuring device 70 while the pre-filter 30 and the alumite mesh 130 are arranged. In FIG. 5, the horizontal axis is the discharge current. As illustrated in FIG. 5, when the auxiliary electrode 13 is arranged, it may be seen that the charging voltage is maintained to be low even when the discharge current value increases, regardless of the presence or absence of the pre-filter 30.

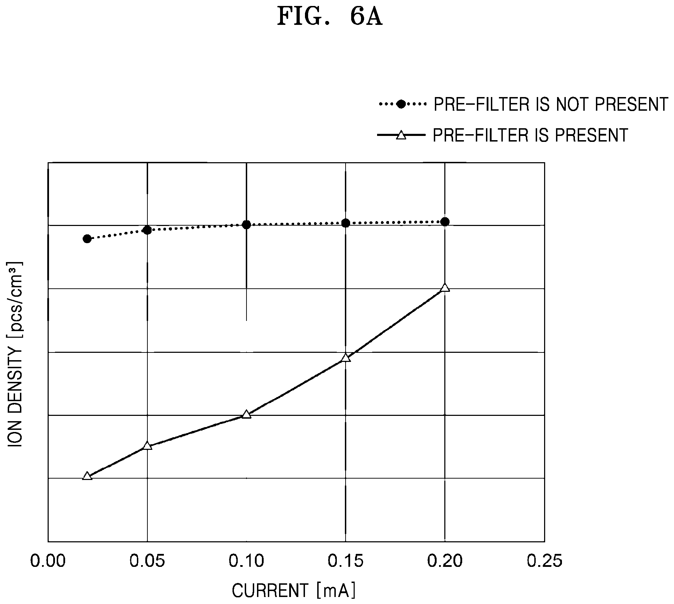

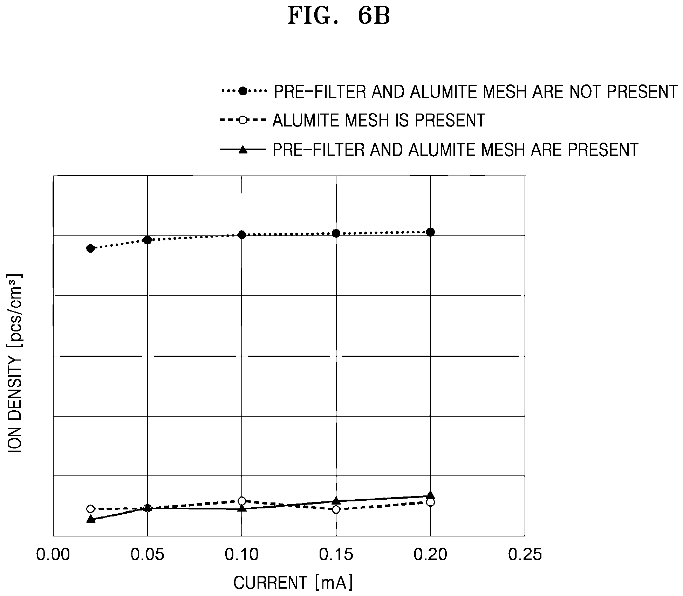

FIG. 6A is a graph showing a result of measuring the amount of ions by using the ion amount measuring device 80 when the alumite mesh 130 is not installed. FIG. 6B is a graph showing a result of measuring the amount of ions by using the ion amount measuring device 80 when the alumite mesh 130 is installed. As illustrated in FIG. 4B, the ion amount measurement is performed at a position away from the alumite mesh 130 or the pre-filter 30 by a certain distance. In the graphs of FIGS. 6A and 6B, the horizontal axis represents the discharge current.

First, referring to Fig. 6A, in a case where "the pre-filter is not present," the amount of ions is very large on the upstream side of the electrostatic precipitator 1, regardless of the discharge current value. In a case where "the pre-filter is present," the amount of ions is small when the discharge current value is low, and the amount of ions increases as the discharge current value increases.

Next, referring to FIG. 6B, a case where "the pre-filter and the alumite mesh are not present" is the same as a case where "the pre-filter is not present" in FIG. 6A. In a case where "only the alumite mesh is present" and a case where "the pre-filter and the alumite mesh are present," the amount of ions on the upstream side of the electrostatic precipitator 1 is very small even when the discharge current value increases, regardless of the presence or absence of the pre-filter 30.

From FIGS. 6A and 6B, it may be seen that, when the auxiliary electrode 13 is installed, the amount of ion emission to the outside of the electrostatic precipitator 1 is significantly suppressed, compared to a case where only the pre-filter 30 is installed.

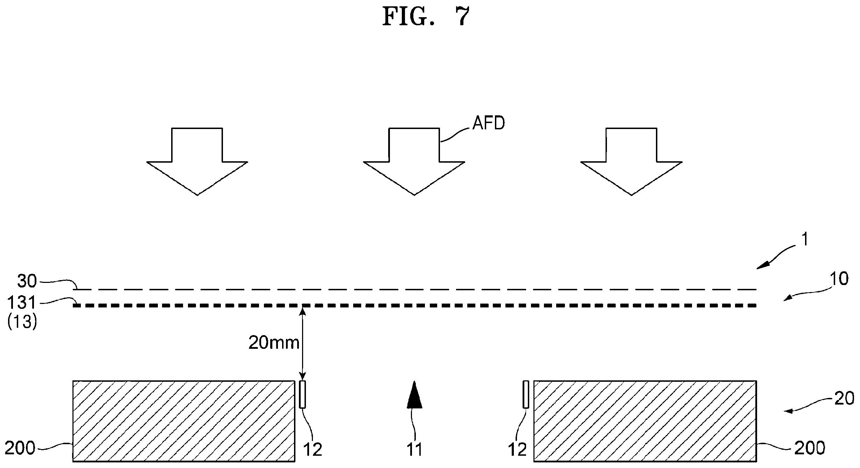

FIG. 7 is a schematic configuration diagram of an electrostatic precipitator 1 according to an embodiment of the disclosure. Referring to FIG. 7, a charger 10 may include a discharge electrode 11 and a ground electrode 12 as charging electrodes. A dust collector 20 may include a dust collection film 200. The electrostatic precipitator 1 has a one-stage structure in which the charging electrode of the charger 10 and the dust collector 20 are arranged at substantially the same position with respect to a ventilation direction AFD. A white alumite mesh 131 having a thickness of 10 µm or 20 µm may be arranged as the auxiliary electrode 13 at a position 20 mm upstream away from the charging electrode of the charger 10. A pre-filter 30 may be arranged upstream of the white alumite mesh 131.

In the electrostatic precipitator 1 of FIG. 7 according to an embodiment of the disclosure, the influence of the thickness of the auxiliary electrode 13 on the performance of the electrostatic precipitator 1 is described. First, the surface potential is measured by the measuring method illustrated in FIG. 4A. Hereinafter, a case where a pre-filter 30 is installed and a white alumite mesh 131 is not installed is referred to as "only the pre-filter is present." A case where the pre-filter 30 is not installed and a white alumite mesh 131 having a thickness of 10 µm is installed is referred to as "only a white alumite mesh (10 µm) is present" and a case where the pre-filter 30 is not installed and a white alumite mesh 131 having a thickness of 20 µm is installed is referred to as "only a white alumite mesh (20 µm) is present."

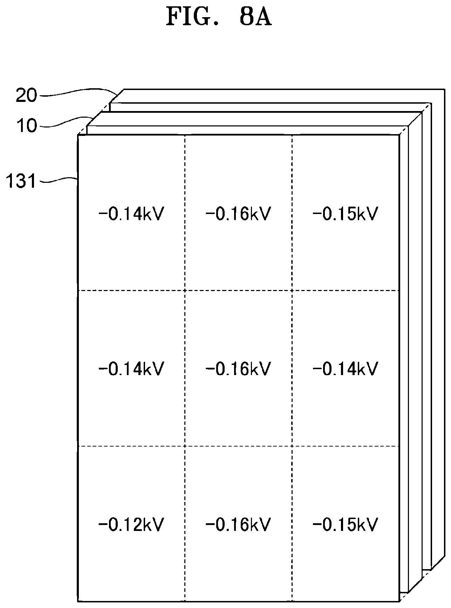

FIG. 8A is a diagram illustrating a result of measuring a surface potential when only a white alumite mesh (10 µm) is present. FIG. 8A illustrates the surface potential of the white alumite mesh 131 measured at a position 25 mm upstream away from the white alumite mesh 131 having a thickness of 10 µm by using the electrostatic measuring device 70 while the pre-filter 30 is separated from the electrostatic precipitator 1 illustrated in FIG. 7. The discharge voltage is -6 kV.

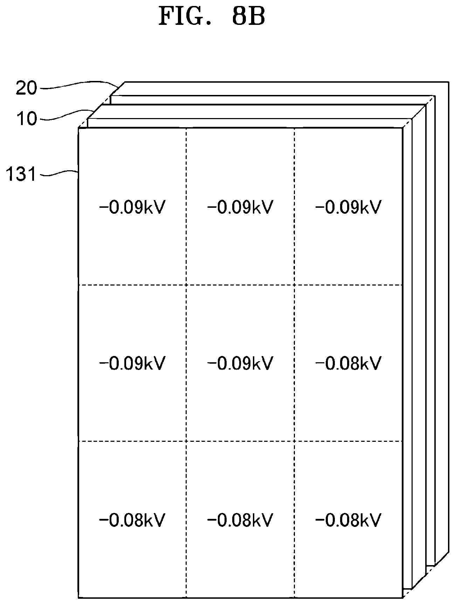

FIG. 8B is a diagram showing a result of measuring a surface potential when only a white alumite mesh (20 µm) is present. FIG. 8B illustrates the surface potential of the white alumite mesh 131 measured at a position 25 mm upstream away from the white alumite mesh 131 having a thickness of 20 µm by using the electrostatic measuring device 70 while the pre-filter 30 is separated from the electrostatic precipitator 1 illustrated in FIG. 7. The discharge voltage is -6 kV.

FIGS. 8A and 8B show a result of dividing the surface of the white alumite mesh 131 into nine regions, i.e., 3x3 regions, and measuring the surface potential for each region. In FIGS. 8A and 8B, the horizontal direction corresponds to the longitudinal direction of the white alumite mesh 131 of FIG. 7 perpendicular to the ventilation direction AFD. In FIGS. 8A and 8B, the vertical direction corresponds to a direction perpendicular to both the longitudinal direction of the white alumite mesh 131 of FIG. 7 and the ventilation direction AFD, i.e., a direction perpendicular to a plane in FIG. 7. It may be seen from FIGS. 8A and 8B that the surface potential of the white alumite mesh 131 is very low. In particular, the surface potential of the white alumite mesh 131 having a thickness of 20 µm is lower than the surface potential of the white alumite mesh 131 having a thickness of 10 µm.

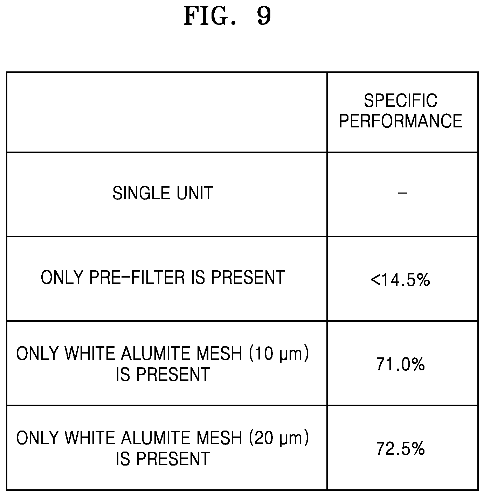

FIG. 9 is a diagram showing performance for a purification area by the electrostatic precipitator 1 according to an embodiment of the disclosure. In FIG. 9, specific performance refers to a ratio of the purification area in each case when the purification area of a single unit is set to 100 %.

Referring to FIG. 9, in a case where only a pre-filter is present, specific performance becomes less than 14.5 %, and thus, performance for the purification area is very deteriorated. In addition, in a case where only a white alumite mesh (10 µm) is present, the surface potential of the white alumite mesh 131 is very low, as illustrated in FIG. 8A, and specific performance is also about 71.0 %. Accordingly, performance for the purification area is significantly improved, compared to a case where only a pre-filter is present. In a case where only a white alumite mesh (20 µm) is present, the surface potential of the white alumite mesh 131 is very low, as illustrated in FIG. 8B, and specific performance is also about 72.5 %. Accordingly, performance for the purification area is significantly improved, compared to a case where only a pre-filter is present.

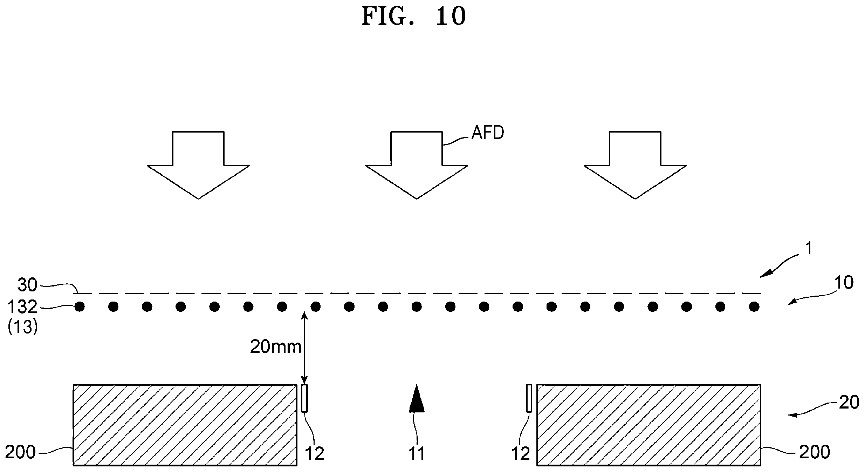

FIG. 10 is a schematic configuration diagram of an electrostatic precipitator 1 according to an embodiment of the disclosure. Referring to FIG. 10, a charger 10 may include a discharge electrode 11 and a ground electrode 12 as charging electrodes. A dust collector 20 may include a dust collection film 200. The charging electrode of the charger 10 and the dust collector 20 have a one-stage structure, as illustrated in FIG. 7. As an auxiliary electrode 13, a hard alumite rod 132 having a thickness of 20 µm may be arranged at a position 20 mm upstream away from the charging electrode of the charger 10 with respect to a ventilation direction AFD. A pre-filter 30 may be arranged upstream of the hard alumite rod 132.

In the electrostatic precipitator 1 of FIG. 10 according to an embodiment of the disclosure, the influence of the use of the hard alumite rod 132 as the auxiliary electrode 13 on the performance of the electrostatic precipitator 1 is described. First, the surface potential is measured by the measuring method illustrated in FIG. 4A. Hereinafter, a case where the pre-filter 30 is installed and the hard alumite rod 132 is not installed is referred to as "only a pre-filter is present." A case where the pre-filter 30 is not installed and the hard alumite rod 132 is installed is referred to as "only a hard alumite rod (20 µm) is present." A case where both the pre-filter 30 and the hard alumite rod 132 are installed is referred to as "a hard alumite rod (20 µm) and a pre-filter are present."

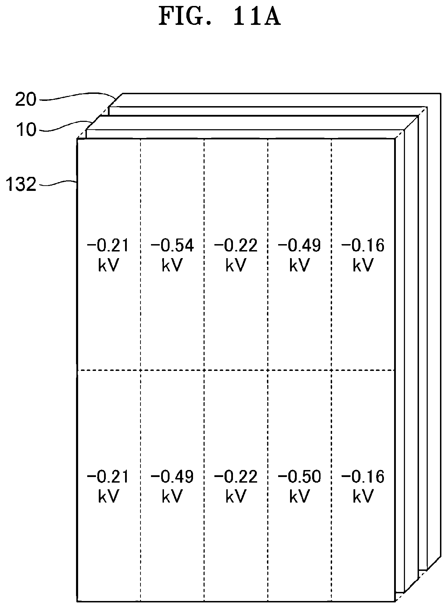

FIG. 11A is a diagram showing a result of measuring a surface potential when only a hard alumite rod (20 µm) is present. FIG. 11A illustrates the surface potential of the hard alumite rod 132 measured at a position 25 mm upstream away from the hard alumite rod 132 by using the electrostatic measuring device 70 while the pre-filter 30 is separated from the electrostatic precipitator 1 illustrated in FIG. 10. The discharge voltage is -6 kV.

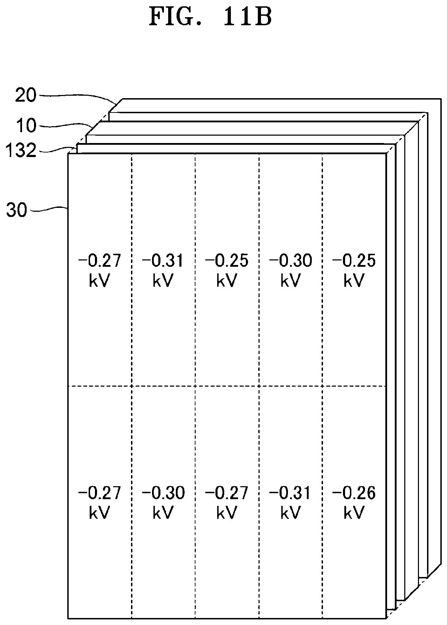

FIG. 11B is a diagram showing a result of measuring a surface potential when a hard alumite rod (20 µm) and a pre-filter are present. FIG. 11B illustrates the surface potential of the pre-filter 30 measured at a position 25 mm upstream away from the pre-filter 30 with respect to the ventilation direction AFD by using the electrostatic measuring device 70 in the electrostatic precipitator 1 illustrated in FIG. 10. The discharge voltage is -6 kV.

FIGS. 11A and 11B show a result of dividing the arrangement range of the hard alumite rod 132 into ten regions, i.e., 2x5 regions, and measuring the surface potential for each region. In FIGS. 11A and 11B, the horizontal direction corresponds to a direction perpendicular to the ventilation direction AFD in FIG. 10 (i.e., the arrangement direction of a plurality of hard alumite rods 132). In FIGS. 11A and 11B, the longitudinal direction corresponds to a direction perpendicular to both the ventilation direction AFD and the arrangement direction of the hard alumite rods 132, i.e., a direction perpendicular to a plane in FIG. 10. It may be seen from FIGS. 11A and 11B that the surface potential of the hard alumite rod 132 or the pre-filter 30 is very low.

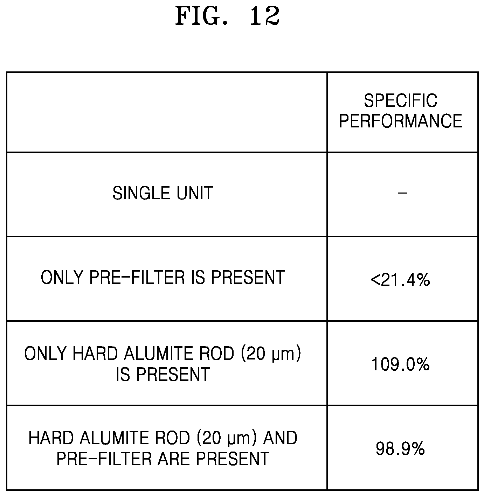

FIG. 12 is a diagram showing performance for a purification area by the electrostatic precipitator 1 according to an embodiment of the disclosure. In FIG. 12, specific performance refers to a ratio of the purification area in each case when the purification area of a single unit is set to 100 %.

Referring to FIG. 12, in a case where only a pre-filter is present, specific performance becomes less than 21.4 %, and thus, performance for the purification area is very deteriorated. In addition, in a case where only a hard alumite rod (20 µm) is present, the surface potential of the hard alumite rod 132 is very low, as illustrated in FIG. 11A, and specific performance is also about 109.0 %. Accordingly, performance for the purification area is significantly improved, compared to a case where only a pre-filter is present. In addition, in a case where a hard alumite rod (20 µm) and a pre-filter are present, the surface potential of the pre-filter 30 is very low, as illustrated in FIG. 11B, and specific performance is also about 98.9 %. Accordingly, performance for the purification area is significantly improved, compared to a case where only a pre-filter is present.

As described above, in the electrostatic precipitator 1 according to the disclosure, electric discharge is generated by applying a high voltage between the discharge electrode 11 and the ground electrode 12, and airborne particulate matter is charged by ions generated by the electric discharge. An auxiliary electrode 13 that suppresses charging may be arranged in an ion diffusion space. In general, in order to suppress charging of a target object, it is necessary to provide a wide ion diffusion space. However, according to the disclosure, charging may be suppressed even with a narrow ion diffusion space without expanding an ion diffusion space. In addition, because the auxiliary electrode 13 serves to discharge electric charges, leakage of ions out of the ion diffusion space may be reduced or prevented. By surface-treating the auxiliary electrode 13 with an insulating member, spark discharge between the discharge electrode 11 and the auxiliary electrode 13 may be reduced or prevented.

An air conditioner according to an aspect of the disclosure includes an indoor heat exchanger configured to perform heat exchange with air sucked in from an air conditioning space, and an electrostatic precipitator configured to remove airborne particulate matter before discharging the air into the air conditioning space. The electrostatic precipitator includes a charger and a dust collector. The charger includes a plurality of charging electrodes and an auxiliary electrode. The plurality of charging electrode include a discharge electrode and a ground electrode and configured to generate ions by corona discharge to charge airborne particulate matter. The auxiliary electrode is arranged upstream of the discharge electrode with respect to a ventilation direction, which is an airflow direction, and connected to the ground potential to discharge an ion current diffused upstream of the discharge electrode. The dust collector is configured to collect the airborne particulate matter charged by the ions by using Coulomb force.

The ions generated by the charger and diffused upstream may be discharged through the grounded auxiliary electrode. Because the ions do not diffuse beyond the auxiliary electrode, charging of peripheral members, such as the pre-filter, may be prevented without increasing the size of the ion diffusion space, and the charging performance of the charger may be stabilized.

In an embodiment of the disclosure, the auxiliary electrode may include a static electricity dissipative material.

In an embodiment of the disclosure, the auxiliary electrode may include a main region including an insulating member, an end region including a conductive member and connected to a ground potential, and the insulating member may include the static electricity dissipative material.

Because the static electricity dissipative material is not easily charged and, even when charged, relatively quickly attenuates charging potential, the charged electric charges do not accumulate on the surface of the auxiliary electrode and may be easily discharged. In addition, the static electricity dissipative material does not cause violent electrostatic discharge even when a charged object comes into contact therewith.

In an embodiment of the disclosure, the static electricity dissipative may have a surface with a porous structure. Electric charges are discharged through micropores, and thus, are not accumulate on the surface.

In an embodiment of the disclosure, the static electricity dissipative material may have a surface resistivity of 10⁴ Ω/sq. to 10¹² Ω/sq.

In an embodiment of the disclosure, the static electricity dissipative material may include at least one of alumite, zirconia, cationic polymer, semiconductive silicone rubber, extruded foamed polyethylene, or crosslinked polyethylene.

In an embodiment of the disclosure, the auxiliary electrode may include any one of a flat electrode having a plurality of openings and a plurality of rod-shaped electrodes.

In an embodiment of the disclosure, the ground electrode may include any one of a flat plate-shaped member and a rod-shaped member.

In an embodiment of the disclosure, the discharge electrode may include any one of a needle-shaped conductive member, a saw-toothed conductive member, and a plurality of fiber-shaped conductive members.

In an embodiment of the disclosure, the dust collector may be arranged on a downstream side of the charger with respect to the ventilation direction.

In an embodiment of the disclosure, the dust collector may be arranged at approximately a same position as a position of the charger with respect to the ventilation direction.

An air purifier according to an aspect of the disclosure includes an electrostatic precipitator configured to remove airborne particulate matter before discharging sucked air into an air purifying space. The electrostatic precipitator includes a charger and a dust collector. The charger includes a plurality of charging electrodes and an auxiliary electrode. The plurality of charging electrode include a discharge electrode and a ground electrode and configured to generate ions by corona discharge to charge airborne particulate matter. The auxiliary electrode is arranged upstream of the discharge electrode with respect to a ventilation direction, which is an airflow direction, and connected to the ground potential to discharge an ion current diffused upstream of the discharge electrode. The dust collector is configured to collect the airborne particulate matter charged by the ions by using Coulomb force.

In an embodiment of the disclosure, the auxiliary electrode may include a main region including an insulating member, an end region including a conductive member and connected to a ground potential. The insulating member may include a static electricity dissipative material.

In an embodiment of the disclosure, the static electricity dissipative material may have a surface with a porous structure.

In an embodiment of the disclosure, the auxiliary electrode may include any one of a flat electrode having a plurality of openings and a plurality of rod-shaped electrodes.

The electrostatic precipitator according to an aspect of the disclosure includes a charger and a dust collector. The charger includes a plurality of charging electrodes and an auxiliary electrode. The plurality of charging electrode include a discharge electrode and a ground electrode and configured to generate ions by corona discharge to charge airborne particulate matter. The auxiliary electrode is arranged upstream of the discharge electrode with respect to a ventilation direction, which is an airflow direction, and connected to the ground potential to discharge an ion current diffused upstream of the discharge electrode. The dust collector is configured to collect the airborne particulate matter charged by the ions by using Coulomb force.

In an embodiment of the disclosure, the auxiliary electrode may include a static electricity dissipative material.

In an embodiment of the disclosure, the auxiliary electrode may include a main region including an insulating member, an end region including a conductive member and connected to a ground potential. The insulating member may include the static electricity dissipative material.

In an embodiment of the disclosure, the static electricity dissipative material may have a surface with a porous structure.

In an embodiment of the disclosure, the static electricity dissipative material may include at least one of alumite, zirconia, cationic polymer, semiconductive silicone rubber, extruded foamed polyethylene, or crosslinked polyethylene.

The technical effects to be achieved by the disclosure are not limited to those described above, and other technical effects that are not mentioned herein will be clearly understood by those of ordinary skill in the art from the description of the disclosure.

As described above, although the air conditioner, the air purifier, and the electrostatic precipitator of the disclosure have been described by limited embodiments of the disclosure and drawings, the disclosure is not limited to the above-described embodiments of the disclosure, and various modifications are possible without departing from the scope thereof.

## Claims

1. An air conditioner comprising:
an indoor heat exchanger (201) configured to perform heat exchange with air sucked in from an air conditioning space; and
an electrostatic precipitator (1) configured to remove airborne particulate matter before discharging the air into the air conditioning space,
wherein the electrostatic precipitator comprises:
a charger (10) comprising a plurality of charging electrodes comprising a discharge electrode (11) and a ground electrode (12) and configured to generate ions by corona discharge to charge airborne particulate matter, and an auxiliary electrode (13) arranged upstream of the discharge electrode with respect to a ventilation direction (AFD), which is an airflow direction, and connected to the ground potential to discharge an ion current diffused upstream of the discharge electrode; and
a dust collector (20) configured to collect the airborne particulate matter charged by the ions by using Coulomb force.

2. The air conditioner of claim 1, wherein the auxiliary electrode includes a static electricity dissipative material.

3. The air conditioner of claim 1, wherein the auxiliary electrode comprises a main region (13a) comprising an insulating member, and an end region (13b) comprising a conductive member and connected to a ground potential, and
the insulating member includes a static electricity dissipative material.

4. The air conditioner of claim 2 or 3, wherein the static electricity dissipative material has a surface with a porous structure.

5. The air conditioner of any one of claims 2 to 4, wherein the static electricity dissipative material has a surface resistivity of 10⁴ Ω/sq. to 10¹² Ω/sq.

6. The air conditioner of any one of claims 2 to 5, wherein the static electricity dissipative material includes at least one of alumite, zirconia, cationic polymer, semiconductive silicone rubber, extruded foamed polyethylene, or crosslinked polyethylene.

7. The air conditioner of any one of claims 1 to 6, wherein the auxiliary electrode comprises any one of a flat electrode having a plurality of openings and a plurality of rod-shaped electrodes.

8. The air conditioner of any one of claims 1 to 7, wherein the ground electrode comprises any one of flat plate-shaped member and a rod-shaped member.

9. The air conditioner of any one of claims 1 to 8, wherein the discharge electrode comprises any one of a needle-shaped conductive member, a saw-toothed conductive member, and a plurality of fiber-shaped conductive members.

10. The air conditioner of any one of claims 1 to 9, wherein the dust collector is arranged on a downstream side of the charger with respect to the ventilation direction.

11. The air conditioner of any one of claims 1 to 9, wherein the dust collector is arranged at approximately a same position as a position of the charger with respect to the ventilation direction.

12. An air purifier comprising an electrostatic precipitator (1) configured to remove airborne particulate matter before discharging sucked air into an air purifying space,
wherein the electrostatic precipitator comprises:
a charger (10) comprising a plurality of charging electrodes comprising a discharge electrode (11) and a ground electrode (12) and configured to generate ions by corona discharge to charge airborne particulate matter, and an auxiliary electrode (13) arranged upstream of the discharge electrode with respect to a ventilation direction (AFD), which is an airflow direction, and connected to the ground potential to discharge an ion current diffused upstream of the discharge electrode; and
a dust collector (20) configured to collect the airborne particulate matter charged by the ions by using Coulomb force.

13. The air purifier of claim 12, wherein the auxiliary electrode comprises a main region (13a) comprising an insulating member, and an end region (13b) comprising a conductive member and connected to a ground potential, and
the insulating member includes a static electricity dissipative material.

14. The air purifier of claim 12, wherein the static electricity dissipative material has a surface with a porous structure.

15. The air purifier of any one of claims 12 to 14, wherein the auxiliary electrode comprises any one of a flat electrode having a plurality of openings and a plurality of rod-shaped electrodes.
